(19) Europäisches Patentamt
European Patent Office
Office européen des brevets

(11) **EP 0 677 553 B1**

(12) **EUROPÄISCHE PATENTSCHRIFT**

(45) Veröffentlichungstag und Bekanntmachung des Hinweises auf die Patenterteilung:
**16.06.1999 Patentblatt 1999/24**

(51) Int Cl.⁶: **C08L 23/10**

(21) Anmeldenummer: **95103954.4**

(22) Anmeldetag: **17.03.1995**

(54) **Orientierte Polyolefinfolie mit amorphem Polymer, Verfahren zu ihrer Herstellung und ihre Verwendung**

Oriented polyolefin film with amorphous polymer, process of preparation and use thereof

Film en polyoléfin orienté des polymères amorphes, procédé pour sa fabrication et sa utilisation

(84) Benannte Vertragsstaaten:
**BE DE ES FR GB IT NL**

(30) Priorität: **26.03.1994 DE 4410559**

(43) Veröffentlichungstag der Anmeldung:
**18.10.1995 Patentblatt 1995/42**

(73) Patentinhaber: **Ticona GmbH**
**65451 Kelsterbach (DE)**

(72) Erfinder:
• **Peiffer, Herbert, Dr.**
  **D-55126 Mainz (DE)**
• **Murschall, Ursula, Dr.**
  **D-55283 Nierstein (DE)**
• **Schlögl, Gunter, Dr.**
  **D-65779 Kelkheim (DE)**
• **Osan, Frank, Dr.**
  **D-65779 Kelkheim (DE)**
• **Dries, Thomas, Dr.**
  **D-55270 Schwabenheim (DE)**

(56) Entgegenhaltungen:
**EP-A- 0 180 087        EP-A- 0 244 614**
**EP-A- 0 351 463        EP-A- 0 386 896**
**EP-A- 0 436 178        EP-A- 0 503 422**
**EP-A- 0 610 814        DD-A- 214 623**
**DE-A- 4 128 820**

• **DATABASE WPI Derwent Publications Ltd., London, GB; AN 73-64662u & JP-A-52 021 545 (T SHIMIZU) , 11.Juni 1977**

## Beschreibung

Die vorliegende Erfindung betrifft eine orientierte Polyolefinfolie, die mindestens eine vakuolenhaltige Schicht enthält. Die Erfindung betrifft ferner ein Verfahren zur Herstellung der Polyolefinfolie sowie ihre Verwendung.

Polyolefinfolien werden für viele verschiedene Anwendungen eingesetzt und können grob gesehen in zwei Gruppen unterteilt werden, die transparenten und die nicht transparenten Folientypen. Transparente Folien haben naturgemäß eine möglichst geringe Trübung, während die nicht transparenten Typen eine so hohe Trübung haben, daß eine sinnvolle Messung dieser Größe nicht möglich ist. Daher bestimmt man bei nicht transparenten Folien stattdessen deren Lichtdurchlässigkeit. Je nach Grad der Lichtdurchlässigkeit unterscheidet man zwischen transluzenten und opaken bzw. weißen Folien.

Nicht transparente Folien enthalten in mindestens einer Schicht Pigmente oder vakuoleniniziierende Teilchen bzw. eine Kombination aus diesen, wodurch die Folien im Vergleich zu transparenten Folien eine reduzierte Lichtdurchlässigkeit haben.

Pigmente sind Teilchen, die im wesentlichen nicht zur Vakuolenbildung beim Verstrecken der Folie führen. Die färbende Wirkung der Pigmente wird durch die Teilchen selbst verursacht. Der Begriff "Pigment" ist im allgemeinen an eine Teilchengröße von 0,01 bis maximal 1 µm gebunden und umfaßt sowohl sogenannte "Weißpigmente", welche die Folien weiß einfärben, als auch "Buntpigmente", welche der Folie eine bunte oder schwarze Farbe verleihen.

Opake Folien enthalten vakuoleniniziierende Teilchen, welche mit der Polymermatrix unverträglich sind und beim Verstrecken der Folien zur Bildung von vakuolenartigen Hohlräumen führen, wobei Größe, Art und Anzahl der Vakuolen vom Material und von der Größe der festen Teilchen und den Streckbedingungen wie Streckverhältnis und Strecktemperatur abhängig sind. Die Vakuolen reduzieren die Dichte und geben den Folien ein charakteristisches perlmuttartiges, opakes Aussehen, welches durch Lichtstreuung an den Grenzflächen Vakuole/Polymermatrix entsteht. Im allgemeinen beträgt der mittlere Teilchendurchmesser der vakuoleniniziierenden Teilchen 1 bis 10 µm.

Übliche vakuoleniniziierende Teilchen sind anorganische und/oder organische, mit Polypropylen unverträgliche Materialien wie Oxide, Sulfate, Carbonate oder Silicate sowie unverträgliche Polymere wie Polyester oder Polyamide. "Unverträgliche Materialien" bzw. "unverträgliche Polymere" bedeutet, daß das Material bzw. das Polymere in der Folie als separates Teilchen bzw. als separate Phase vorliegt.

Die Dichte der nicht transparenten Folien kann innerhalb weiter Grenzen variieren und hängt von der Art und der Menge der Füllstoffe ab. Die Dichte liegt im allgemeinen im Bereich von 0,4 bis 1,1 g/cm$^3$.

Im einzelnen sind derartige nicht transparente Folien in folgenden Schriften beschrieben:

Die EP-A-0 004 633 beschreibt eine heißsiegelbare, opake, biaxial orientierte Kunststoffolie, die fein verteilte feste, insbesondere anorganische, Teilchen einer Größe von 0,2 bis 20 µm enthält und mindestens eine Heißsiegelschicht aus einem Propylen-Ethylen-Copolymeren aufweist. Zur Erzielung der Opazität sind außer den anorganischen Teilchen auch opake organische Partikel z. B. aus vernetztem Kunststoff geeignet, wobei der Schmelzpunkt der Kunststoffteilchen oberhalb der während der Herstellung der Folie auftretenden Temperaturen liegt. Die Folie soll gegenüber dem Stand der Technik in ihrer Siegelfähigkeit, in ihrem Glanz und in ihrer Bedruckbarkeit verbessert sein. Die beschriebene Folie hat den Nachteil, daß ihre Opazität und ihre Dichte rohstoff- und prozeßbedingten Schwankungen unterliegen, welche hauptsächlich durch Änderung der Partikelkonzentration ausgeglichen werden können. In Abhängigkeit von der Partikelkonzentration und der Korngrößenverteilung der Partikel können jedoch Agglomerationen der Partikel auftreten, wodurch die Folienoptik ungleichmäßig und beeinträchtigt wird. Prinzipiell ist die Opazität dieser Opakfolien bei konstanter Partikelkonzentration von der Foliendicke abhängig. Daneben sind die mechanischen Eigenschaften der Folie noch verbesserungsbedürftig. Bei Einsatz von anorganischen Teilchen zeigt die Folie unerwünschtes Auskreiden beim Konfektionieren und bei der Weiterverarbeitung.

Die EP-A-0 083 495 beschreibt eine undurchsichtige, biaxial orientierte Folie mit satiniertem Aussehen und einem Oberflächenglanz von größer als 100 %, die mindestens einen kugelförmigen Feststoffpartikel je Vakuole enthält. Des weiteren umfaßt die Folie auf beiden Oberflächen der Kernschicht eine porenfreie, transparente, thermoplastische Mantelschicht, die eine die Optik der Folie bestimmende Dicke aufweist. Als Material für den Feststoffpartikel wird z. B. Nylon angegeben. Die Teilchen haben in der Regel einen Durchmesser, der größer als 1 µm ist. Auch bei dieser Folie wird die Opazität hauptsächlich durch die Menge der Feststoffpartikel und die Verfahrensparameter bei der biaxialen Orientierung bestimmt, und es treten die zuvor beschriebenen Nachteile bezüglich Opazitätsschwankungen auf.

Die EP-A-0 351 463 beschreibt eine Folie mit Poly-α-methylstyrol als Vakuoleninitiator. Das nach dieser Schrift eingesetzte amorphe Polymere ist jedoch kein Cycloolefinpolymer.

Die JP-A-52 021 545 beschreibt eine Folie mit herkömmlichen Füllstoffen wie z.B. Kalziumkarbonat und Polystyrol. Polystyrol ist aber kein Cycloolefinpolymer.

Die EP-A-0 436 178 beschreibt eine opake Folie mit vernetzten Polymeren als Vakuoleninitiator. Vernetzte Polymere sind aber nicht amorph, und unter den in dieser Schrift genannten Polymeren sind Cycloolefinpolymere nicht erwähnt.

Die EP-A-0 244 614 beschreibt opake Folien aus Polystyrol und Polypropylen. Polystyrol ist aber kein Cycloolefinpolymer, das in der herangezogenen Literaturstelle nicht erwähnt ist.

Die EP-A-0 180 087 beschreibt eine opake Folie mit Zwischenschichten. Als Füllstoffe sind konventionelle Füllstoffe wie Titandioxid, Kalziumkarbonat etc. beschrieben. Darunter sind weder Polymere Füllstoffe noch Cycloolefinpolymere aufgezählt. Zusätzlich enthält die Folie verträgliche Kohlenwasserstoffharze in einer weiteren Schicht. Die genannten Harze sind nicht amorph und umfassen auch keine Cycloolefinpolymere.

Die DE-A-41 28 820 beschreibt eine Verbundfolie mit guter Sauerstoffbarriere, die eine spezielle Barriereschicht aus $SiO_x$ aufweist. Die Folie ist transparent und nicht opak und sie enthält auch keine Cycloolefinpolymeren.

Die Aufgabe der vorliegenden Erfindung bestand darin, eine nicht transparente Polyolefinfolie zur Verfügung zu stellen, bei der die Transluzenz bzw. die Opazität durch einfache Maßnahmen eingestellt und in einem weiten Maße variiert werden kann. Des weiteren soll die Folie nicht auskreiden und gute mechanische und homogene optische Eigenschaften aufweisen. Insbesondere sind eine hohe Foliensteifigkeit und ein hoher Glanz besonders wünschenswert.

Diese Aufgabe wird gelöst durch eine Polyolefinfolie der eingangs genannten Gattung, deren kennzeichnendes Merkmal darin besteht, daß die vakuolenhaltige Schicht ein amorphes, vakuoleniniziierendes Polymer enthält, welches nach der Orientierung innerhalb der Vakuole als separiertes Teilchen vorliegt, wobei das amorphe Polymer ein amorphes Copolymer von polycyclischen Olefinen ist.

Die erfindungsgemäße Folie ist einschichtig oder mehrschichtig. Einschichtige Ausführungsformen sind wie die nachstehend beschriebene vakuolenhaltige Schicht der mehrschichtigen Folie aufgebaut. Mehrschichtige Ausführungsformen sind mindestens zweischichtig und umfassen immer die vakuolenhaltige Schicht und zumindest eine weitere Schicht, wobei die vakuolenhaltige Schicht die Basis-, die Zwischen- oder die Deckschicht der mehrschichtigen Folie bilden kann. In einer bevorzugten Ausführungsform bildet die vakuolenhaltige Schicht die Basisschicht der Folie mit mindestens einer, vorzugsweise mit beidseitigen Deckschicht/en, wobei gegebenenfalls zwischen der vakuolenhaltigen Basisschicht und der/den Deckschicht/en einseitig eine oder beidseitig nicht vakuolenhaltige oder vakuolenhaltige Zwischenschicht/en vorhanden sein kann/können. In einer weiteren bevorzugten Ausführungsform bildet die vakuolenhaltige Schicht eine Zwischenschicht der Mehrschichtfolie, welche zwischen der nicht vakuolenhaltigen Basisschicht und der Deckschicht vorhanden ist. Weitere Ausführungsformen mit vakuolenhaltiger Zwischenschicht sind fünfschichtig aufgebaut und haben beidseitig vakuolenhaltige Zwischenschichten. In einer weiteren Ausführungsform kann die vakuolenhaltige Schicht eine Deckschicht auf der vakuolenhaltigen oder nicht vakuolenhaltigen Basis- oder Zwischenschicht bilden. Die Basisschicht ist im Sinne der vorliegenden Erfindung diejenige Schicht, welche mehr als 50 % der Gesamffoliendicke ausmacht. Die Deckschicht ist die Schicht, welche die äußerste Schicht der Folie bildet.

Je nach ihrem vorgesehenen Verwendungszweck kann die jeweilige Ausführungsform der nicht transparenten Folie transluzent, opak oder weiß-opak sein. Unter nicht transparenten Folien werden im Sinne der vorliegenden Erfindung solche Folien verstanden, deren Lichtdurchlässigkeit nach ASTM-D 1003-77 unter 95 % liegt. Zwischen transluzenten, opaken bzw. weiß-opaken Typen wird nach ihrer Lichtdurchlässigkeit unterschieden. Transluzente Folien haben eine Lichtdurchlässigkeit von 95 bis 70 %, und opake bzw. weiß-opake Typen haben eine Lichtdurchlässigkeit von 69 bis 0 %, jeweils gemessen nach ASTM-D 1003-77.

Die vakuolenhaltige Schicht der erfindungsgemäßen Folie enthält ein Polyolefin, vorzugsweise ein Propylenpolymer, und ein amorphes, vakuoleniniziierendes Polymer sowie gegebenenfalls weitere zugesetzte Additive in jeweils wirksamen Mengen. Im allgemeinen enthält die vakuolenhaltige Schicht mindestens 50 Gew.-%, vorzugsweise 70 bis 99 Gew.-%, insbesondere 80 bis 98 Gew.-%, des Propylenpolymeren, bezogen auf das Gewicht der vakuolenhaltigen Schicht.

Das Propylenpolymere enthält im allgemeinen 90 bis 100 Gew.-%, vorzugsweise 95 bis 100 Gew.-%, insbesondere 98 bis 100 Gew.-%, Propylen und besitzt im allgemeinen einen Schmelzpunkt von 120 °C oder höher, vorzugsweise 150 bis 170 °C und im allgemeinen einen Schmelzflußindex von 0,5 g/10 min bis 8 g/10 min, vorzugsweise 2 g/10 min bis 5 g/10 min, bei 230 °C und einer Kraft von 21,6 N (DIN 53 735). Isotaktisches Propylenhomopolymer mit einem ataktischen Anteil von 15 Gew.-% und weniger, Copolymere von Ethylen und Propylen mit einem Ethylengehalt von 10 Gew.-% oder weniger, Copolymere von Propylen mit $C_4$-$C_8$-$\alpha$-Olefinen mit einem $\alpha$-Olefingehalt von 10 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die vakuolenhaltige Schicht dar, wobei isotaktisches Propylenhomopolymer besonders bevorzugt ist. Die angegebenen Gewichtsprozente beziehen sich auf das jeweilige Polymere.

Des weiteren ist eine Mischung aus den genannten Propylenhomo- und/oder -copolymeren und/oder -terpolymeren und anderen Polyolefinen, insbesondere aus Monomeren mit 2 bis 6 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind Polyethylene, insbesondere HDPE, LDPE, LLDPE, wobei der Anteil dieser Polyolefine jeweils 15 Gew.-%, bezogen auf die Polymermischung, nicht übersteigt.

Erfindungsgemäß enthält die vakuolenhaltige Schicht bzw. die Folie bei einschichtigen Ausführungsformen ein amorphes, vakuoleniniziierendes Polymer im allgemeinen in einer Menge von maximal 40 Gew.-%, vorzugsweise 1 bis 30 Gew.-%, insbesondere 2 bis 20 Gew.-%, bezogen auf das Gewicht der vakuolenhaltigen Schicht bzw. der Folie. Es wurde gefunden, daß das amorphe Polymere, welches an sich ein polymerer Feststoff ist und als Rohstoff keinen Teilchencharakter hat, überraschenderweise dennoch als vakuoleniniziierender Füllstoff wirkt. Bei der Streckorientierung der Folie bilden sich zwischen der Polymermatrix der Schicht und dem amorphen Polymer Mikrorisse und Mikrohohlräume, sogenannte Vakuolen, im Bereich derer das sichtbare Licht gebrochen wird. Die Folie erhält dadurch ein transluzentes oder opakes Aussehen und eine reduzierte Dichte, was sie für bestimmte Verpackungszwecke, insbesondere auf dem Lebensmittelsektor, besonders geeignet macht.

Unter amorphen Polymeren werden im Sinne der vorliegenden Erfindung solche Polymeren verstanden, welche trotz einer regellosen Anordnung der Molekülketten bei Raumtemperatur Feststoffe sind. Sie sind im wesentlichen nicht kristallin, und ihr Kristallinitätsgrad liegt im allgemeinen unter 5 %, vorzugsweise unter 2 %, oder beträgt 0 %. Besonders geeignet sind amorphe Polymere, deren Glastemperatur $T_G$ im Bereich von 70 bis 300 °C, vorzugsweise 80 bis 250 °C, insbesondere 100 bis 200 °C, liegt oder deren Vicat-Erweichungstemperatur $T_V$ (VST/B/120) zwischen 70 und 200 °C, vorzugsweise zwischen 80 und 180 °C, liegt. Im allgemeinen hat das amorphe Polymere ein mittleres Molekulargewicht $M_w$ im Bereich von 500 bis 500 000, vorzugsweise 1 000 bis 250 000, insbesondere 3 000 bis 200 000.

Der Brechungsindex des amorphen Polymeren liegt im allgemeinen im Bereich von 1,3 bis 1,7, vorzugsweise 1,4 bis 1,6. Dabei ist es für den Brechungsindex des amorphen Polymeren besonders vorteilhaft, wenn er in einem bestimmten Verhältnis zum Brechungsindex des Polyolefins der vakuolenhaltigen Schicht steht. Im allgemeinen unterscheiden sich die Brechungsindices von amorphem Polymer und Polypropylen maximal um 0,1 Einheiten, vorzugsweise um maximal 0,05 Einheiten.

Das amorphe Polymere liegt in der orientierten Folie überraschenderweise in Form von separierten Teilchen vor, welche in rasterelektronenmikroskopischen Aufnahmen deutlich zu erkennen sind, wenn durch die Orientierung zumindest teilweise Abrisse erfolgten, d. h. wenn sich um das Teilchen aus amorphem Polymer zumindest ansatzweise ein vakuolenartiger Hohlraum gebildet hat. Die Teilchengröße der in der orientierten Folie vorliegenden Teilchen liegt im Bereich von 0,2 bis 10 μm, vorzugsweise 0,5 bis 7 μm, insbesondere 1 bis 5 μm. Überraschenderweise bilden sich auch bei sehr kleinen Teilchengrößen von ≤ 1 μm Vakuolen um die Teilchen aus amorphem Polymer.

Als amorphe Polymere mit dem zuvor beschriebenen Eigenschaftsbild kommen erfindungsgemäß amorphe Homo- und Copolymere von polycyclischen Olefinen (je nach Zusammensetzung und Molekulargewicht $T_G$ = 70 bis 300 °C) zum Einsatz. Die amorphen Polymeren sind Cycloolefinpolymere, welche bekannt sind und in EP-A-0 407 870, EP-A-0 503 422 und DE-A-40 36 264 beschrieben sind, auf welche hier ausdrücklich Bezug genommen wird.

Neben den amorphen Polymeren kann die vakuolenhaltige Schicht in einer weiteren Ausführungsform zusätzlich Pigmente enthalten. Pigmente umfassen im Sinne der vorliegenden Erfindung solche Teilchen, die im wesentlichen nicht zur Vakuolenbildung beim Verstrecken führen. Die färbende Wirkung der Pigmente wird durch die Teilchen selbst verursacht. Der Begriff "Pigment" ist im allgemeinen an eine Teilchengröße von 0,01 bis maximal 1 μm gebunden und umfaßt sowohl sogenannte "Weißpigmente", welche die Folien weiß einfärben, als auch "Buntpigmente", welche der Folie eine bunte oder schwarze Farbe verleihen. Im allgemeinen liegt der mittlere Teilchendurchmesser der Pigmente im Bereich von 0,01 bis 1 μm, vorzugsweise 0,01 bis 0,7 μm, insbesondere 0,01 bis 0,4 μm. Die vakkuolenhaltige Schicht dieser Ausführungsform enthält Pigmente im allgemeinen in einer Menge von 1 bis 25 Gew.-%, insbesondere 2 bis 20 Gew.-%, bevorzugt 5 bis 15 Gew.-%, jeweils bezogen auf die vakuolenhaltige Schicht.

Übliche Pigmente sind Materialien wie z. B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden.

Die Titandioxidteilchen bestehen zu mindestens 95 Gew.-% aus Rutil und werden bevorzugt mit einem Überzug aus anorganischen Oxiden eingesetzt, wie er üblicherweise als Überzug für $TiO_2$-Weißpigment in Papieren oder Anstrichmitteln zur Verbesserung der Lichtechtheit verwendet wird. Zu den besonders geeigneten anorganischen Oxiden gehören die Oxide von Aluminium, Silicium, Zink oder Magnesium oder Mischungen aus zwei oder mehreren dieser Verbindungen. Sie werden aus wasserlöslichen Verbindungen, z. B. Alkali-, insbesondere Natriumaluminat, Aluminiumhydroxid, Aluminiumsulfat, Aluminiumnitrat, Natriumsilikat oder Kieselsäure, in der wäßrigen Suspension ausgefällt. $TiO_2$-Partikel mit einem Überzug werden z. B. in der EP-A-0 078 633 und EP-A-0 044 515 beschrieben.

Gegebenenfalls enthält der Überzug auch organische Verbindungen mit polaren und unpolaren Gruppen. Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie Polydimethylsiloxan und Polymethylhydrogensiloxan.

Der Überzug auf den $TiO_2$-Teilchen besteht gewöhnlich aus 1 bis 12 g, insbesondere 2 bis 6 g, anorganischer Oxide, gegebenenfalls sind zusätzlich 0,5 bis 3 g, insbesondere 0,7 bis 1,5 g, organische Verbindungen, jeweils be-zogen auf 100 g $TiO_2$-Teilchen, enthalten. Als besonders vorteilhaft hat es sich erwiesen, wenn die $TiO_2$-Teilchen mit $Al_2O_3$ oder mit $Al_2O_3$ und Polydimethylsiloxan beschichtet sind.

Die Dichte der erfindungsgemäßen Folien kann innerhalb weiter Grenzen variieren und hängt unter anderem von der Art und der Menge der amorphen Polymeren und der gegebenenfalls zugesetzten Pigmente ab. Die Dichte liegt im allgemeinen unter der rechnerischen Dichte der Einzelkomponenten der Folie, d. h. die Dichte der Folie ist reduziert. Im allgemeinen haben die Folien eine Dichte von maximal 1,5 g/cm$^3$, vorzugsweise liegt die Dichte im Bereich von 0,4 bis 1,3 g/cm$^3$, insbesondere 0,5 bis 1,0 g/cm$^3$.

Die erfindungsgemäße mehrschichtige Ausführungsform der Folie umfaßt mindestens eine weitere vakuolenhaltige oder nicht vakuolenhaltige Schicht, welche die Basisschicht, eine Zwischenschicht oder eine siegelfähige oder nichtsiegelfähige Deckschicht der mehrschichtigen Folie sein kann. Grundsätzlich können die vakuolenhaltige Schicht und die andere/n Schicht/en gleich oder verschieden - aufgebaut sein.

Die andere Schicht enthält im allgemeinen 75 bis 100 Gew.-%, insbesondere 90 bis 99,5 Gew.-%, α-olefinische Polymere mit 2 bis 10 Kohlenstoffatomen, jeweils bezogen auf das Gewicht der anderen Schicht, und gegebenenfalls Additive in jeweils wirksamen Mengen.

Beispiele für derartige α-olefinische Polymere sind

ein Propylenhomopolymer oder
ein Copolymer von

    Ethylen und Propylen oder
    Ethylen und Butylen-1 oder
    Propylen und Butylen-1 oder

ein Terpolymer von

    Ethylen und Propylen und Butylen-1 oder

eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit einem oder mehreren der genannten Homo-, Co- und Terpolymeren,

wobei insbesondere Propylenhomopolymer oder

statistische Ethylen-Propylen-Copolymere mit

    einem Ethylengehalt von 1 bis 10 Gew.-%, bevorzugt 2,5 bis 8 Gew.-%, oder

statistische Propylen-Butylen-1 -Copolymere mit

    einem Butylengehalt von 2 bis 25 Gew.-%, bevorzugt 4 bis 20 Gew.-%,

jeweils bezogen auf das Gesamtgewicht des Copolymeren, oder statistische Ethylen-Propylen-Butylen-1-Terpolymere mit

    einem Ethylengehalt von 1 bis 10 Gew.-%, bevorzugt 2 bis 6 Gew.-%, und
    einem Butylen-1 -Gehalt von 2 bis 20 Gew.-%, bevorzugt 4 bis 20 Gew.-%,
    jeweils bezogen auf das Gesamtgewicht des Terpolymeren, oder

ein Blend aus einem Ethylen-Propylen-Butylen-1-Terpolymeren und einem Propylen-Butylen-1-Copolymeren

    mit einem Ethylengehalt von 0,1 bis 7 Gew.-%
    und einem Propylengehalt von 50 bis 90 Gew.-%
    und einem Butylen-1-Gehalt von 10 bis 40 Gew.-%,
    jeweils bezogen auf das Gesamtgewicht des Polymerblends,

bevorzugt sind.

Das in der/den anderen Schicht/en eingesetzte Propylenhomopolymere enthält 97 bis 100 Gew.-% Propylen und besitzt im allgemeinen einen Schmelzpunkt von 140 °C oder höher, vorzugsweise 150 bis 170 °C, wobei isotaktisches Homopolypropylen mit einem n-heptanlöslichen Anteil von 6 Gew.-% und weniger, bezogen auf das isotaktische Homopolypropylen, bevorzugt ist. Das Homopolymere hat im allgemeinen einen Schmelzflußindex von 1,5 g/10 min bis 20 g/10 min, vorzugsweise 2,0 g/10 min bis 15 g/10 min. Die angegebenen Gewichtsprozente beziehen sich auf das Polymere.

Die in der/den anderen Schichten eingesetzten vorstehend beschriebenen Co- und Terpolymeren weisen im allgemeinen einen Schmelzflußindex von 1,5 bis 30 g/10 min, vorzugsweise von 3 bis 15 g/10 min, auf. Der Schmelzpunkt liegt im allgemeinen im Bereich von 120 bis 140 °C. Das vorstehend beschriebene Blend aus Co- und Terpolymeren hat im allgemeinen einen Schmelzflußindex von 5 bis 9 g/10 min und einen Schmelzpunkt von 120 bis 150 °C. Alle vorstehend angegebenen Schmelzflußindices werden bei 230 °C und einer Kraft von 21,6 N (DIN 53 735) gemessen. Andere Schichten aus Co- und/oder Terpolymeren bilden vorzugsweise die Deckschichten von siegelfähigen Ausführungsformen der Folie.

Grundsätzlich kann die andere Schicht zusätzlich die vorstehend für die vakuolenhaltige Schicht beschriebenen Pigmente in entsprechenden auf das Gewicht dieser Schicht bezogenen Mengen enthalten. Ausführungsformen mit einer vakuolenhaltigen anderen Schicht enthalten analog der vorstehend beschriebenen vakuolenhaltigen Schicht amorphe Polymere als vakuoleniniziierenden Füllstoff.

In einer weiteren vorteilhaften Ausführungsform können die in der vakuolenhaltigen Schicht und/oder anderen Schicht und/oder Basis- und/oder Zwischen- und/oder Deckschicht eingesetzten Propylenpolymeren durch den Zusatz von organischen Peroxiden teilabgebaut werden. Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

$MFI_1 = \quad$ Schmelzflußindex des Propylenpolymers vor dem Zusatz des organischen Peroxids
$MFI_2 = \quad$ Schmelzflußindex des peroxidisch abgebauten Propylenpolymeren

Erfindungsgemäß liegt der Abbaufaktor A des eingesetzten Propylenpolymeren in einem Bereich von 3 bis 15, vorzugsweise 6 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Die Gesamtdicke der Folie kann innerhalb weiter Grenzen variieren und richtet sich nach dem beabsichtigten Verwendungszweck. Die bevorzugten Ausführungsformen der erfindungsgemäßen Folie haben Gesamtdicken von 5 bis 200 µm, wobei 10 bis 100 µm, insbesondere 20 bis 80 µm, bevorzugt sind. Die Dicke der gegebenenfalls vorhandenen Zwischenschicht/en beträgt im allgemeinen jeweils unabhängig voneinander 2 bis 12 µm, wobei Zwischenschichtdicken von 3 bis 8 µm, insbesondere 3 bis 6 µm, bevorzugt sind. Die angegebenen Werte beziehen sich jeweils auf eine Zwischenschicht. Die Dicke der Deckschicht/en wird unabhängig von anderen Schichten gewählt und liegt bevorzugt im Bereich von 0,1 bis 10 µm, insbesondere 0,3 bis 5 µm, vorzugsweise 0,5 bis 2 µm, wobei beidseitig aufgebrachte Deckschichten bezüglich Dicke und Zusammensetzung gleich oder verschieden sein können. Die Dicke der Basisschicht ergibt sich entsprechend aus der Differenz von Gesamtdicke der Folie und der Dicke der aufgebrachten Deck- und Zwischenschicht/en und kann daher analog der Gesamtdicke innerhalb weiter Grenzen variieren.

Um bestimmte Eigenschaften der erfindungsgemäßen Polyolefinfolie noch weiter zu verbessern, können sowohl die einschichtige Folie als auch die vakuolenhaltige Schicht, die andere Schicht, die Basis-, die Zwischen- und/oder die Deckschicht/en der Mehrschichtfolie Zusätze in einer jeweils wirksamen Menge enthalten, gegebenenfalls mit dem Polymeren verträgliche niedermolekulare Kohlenwasserstoffharze und/oder vorzugsweise Antistatika und/oder Antiblockmittel und/oder Gleitmittel und/oder Stabilisatoren und/oder Neutralisationsmittel sowie Antiblockmittel. Alle Mengenangaben in der folgenden Ausführung in Gewichtsprozent (Gew.-%) beziehen sich jeweils auf die Schicht oder Schichten, der oder denen das Additiv zugesetzt sein kann.

Ein niedermolekulares Harz wird bevorzugt z. B. zur Verbesserung der Wasserdampfdurchlässigkeit (WDD) und zur Verbesserung der Foliensteifigkeit zugesetzt. Es erzeugt keine Vakuolen im Gegensatz zu den vorstehend erwähnten natürlichen und synthetischen Harzen, welche amorphe Polymere und unverträglich mit dem Polypropylen sind. Diese verträglichen Kohlenwasserstoffharze sind niedermolekulare Polymere, deren Molekulargewicht im allgemeinen in einem Bereich von 300 bis 8 000, vorzugsweise 400 bis 5 000, vorzugsweise 500 bis 2 000, liegt. Damit ist das Molekulargewicht der Harze deutlich niedriger als das der Propylenpolymeren, welche die Hauptkomponente der einzelnen Folienschichten bilden und im allgemeinen ein Molekulargewicht von über 100 000 haben. Der Anteil des Harzes liegt in einem Bereich von 1 bis 30 Gew.-%, vorzugsweise 2 bis 10 Gew.-%. Der Erweichungspunkt des Harzes liegt zwischen 60 und 180 °C (gemessen nach DIN 1995-U4, entspricht ASTM E-28), vorzugsweise über 100 bis 160 °C. Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben). Geeignete Erdölharze sind in zahlreichen Schriften beschrieben wie beispielsweise EP-A-0 180 087, auf die hier ausdrücklich Bezug genommen wird.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit $\omega$-Hydroxy-$(C_1-C_4)$-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,3 Gew.-%.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3 Gew.-%. Besonders geeignet ist der Zusatz von höheren aliphatischen Säureamiden im Bereich von 0,15 bis 0,25 Gew.-% in der Basisschicht und/oder den Deckschichten. Ein insbesondere geeignetes aliphatisches Säureamid ist Erucasäureamid. Der Zusatz von Polydimethylsiloxanen ist im Bereich von 0,3 bis 2,0 Gew.-% bevorzugt, insbesondere Polydimethylsiloxane mit einer Viskosität von 10 000 bis 1 000 000 mm$^2$/s.

Als Stabilisatoren können die üblichen stabilisierend wirkenden Verbindungen für Ethylen-, Propylen- und andere $\alpha$-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Die Antiblockmittel werden bevorzugt den Deckschichten zugesetzt. Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanamin-formaldehyd-Polymere, Siliciumdioxid und Calciumcarbonat. Die wirksame Menge an Antiblockmittel liegt im Bereich von 0,1 bis 2 Gew.-%, vorzugsweise 0,1 bis 0,5 Gew.-%. Die mittlere Teilchengröße liegt zwischen 1 und 6 μm, insbesondere 2 und 5 μm, wobei Teilchen mit einer kugelförmigen Gestalt, wie in der EP-A-0 236 945 und der DE-A-38 01 535 beschrieben, besonders geeignet sind.

Neutralisationsmittel sind vorzugsweise Calciumstearat und/oder Calciumcarbonat einer mittleren Teilchengröße von höchstens 0,7 μm, einer absoluten Teilchengröße von kleiner 10 μm und einer spezifischen Oberfläche von mindestens 40 m$^2$/g. Im allgemeinen wird das Neutralisationsmittel in einer Menge von 0,02 bis 0,1 Gew.-% zugesetzt.

Die Erfindung betrifft weiterhin ein Verfahren zur Herstellung der erfindungsgemäßen Folie nach dem an sich bekannten Extrusionsverfahren. Im Rahmen dieses Verfahrens wird so vorgegangen, daß die Polymeren oder die Polymermischung in einem Extruder kompimiert und erwärmt werden, anschließend die der Folie bzw. den einzelnen Schichten der Folie entsprechenden Schmelzen durch eine Flachdüse extrudiert bzw. coextrudiert werden, die so erhaltene Folie zur Verfestigung auf einer oder mehreren Walze/n abgezogen wird, die Folie anschließend orientiert, die orientierte Folie thermofixiert und gegebenenfalls an der zur Behandlung vorgesehenen Oberfläche corona- oder flammbehandelt wird.

Es hat sich als besonders günstig erwiesen, die Abzugswalze oder -walzen, durch die die ausgepreßte Folie auch abgekühlt und verfestigt wird, bei einer Temperatur von 10 bis 90 °C zu halten, bevorzugt 20 bis 60 °C.

Die so erhaltene Vorfolie wird vorzugsweise längs und quer zur Extrusionsrichtung gestreckt, was zu einer biaxialen Orientierung der Molekülketten führt. Die biaxiale Orientierung kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, besonders günstig ist. In Längsrichtung wird vorzugsweise 4:1 bis 7:1 und in Querrichtung vorzugsweise 6:1 bis 11:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

Die Temperaturen, bei denen die Längs- und die Querstreckung durchgeführt werden, können in einem großen Bereich variieren. Im allgemeinen wird die Längsstreckung bei 90 bis 150 °C, vorzugsweise 100 bis 140 °C, und die Querstreckung bei 140 bis 190 °C, vorzugsweise 150 bis 180 °C, durchgeführt.

An die biaxiale Streckung der Folie schließt sich ihre Thermofixierung (Wärmebehandlung) an, wobei die Folie etwa 0,5 bis 10 s lang bei einer Temperatur von 110 bis 130 °C gehalten wird. Anschließend wird die Folie in üblicher Weise mit einer Aufwickeleinrichtung aufgewickelt.

Gegebenenfalls kann/können wie oben erwähnt nach der biaxialen Streckung eine oder beide Oberfläche/n der Folie nach einer der bekannten Methoden corona- oder flammbehandelt werden, wobei für eine Flammbehandlung mit polarisierter Flamme (vgl. US-A-4,622,237) eine elektrische Gleichspannung zwischen einem Brenner (negativer Pol) und einer Kühlwalze angelegt wird. Die Höhe der angelegten Spannung beträgt zwischen 500 und 3 000 V, vorzugsweise liegt sie im Bereich von 1 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Für die alternative Coronabehandlung wird die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen. Die Behandlungsintensitäten liegen im üblichen Rahmen, wobei 38 bis 45 mN/m bevorzugt sind.

Die amorphen Polymeren werden entweder als reines Granulat oder als granuliertes Konzentrat (Masterbatch) in die Folie eingearbeitet, indem das Polyolefingranulat oder -pulver mit dem amorphen Polymeren vorgemischt und anschließend dem Extruder zugeführt wird. Im Extruder werden die Komponenten weiter vermischt und auf Verarbeitungstemperatur erwärmt. Es wurde gefunden, daß die Opazität und der Glanz der Folie auch von den Extrusionsbedingungen (Temperatur, Scherung) abhängen. Überraschenderweise lassen sich unter sonst gleichen Bedingungen bezüglich Rohstoff und Streckverfahren die Opazität und der Glanz alleine über die Bedingungen im Extruder variieren. Damit werden völlig neue Wege eröffnet, die Charakteristika einer transluzenten oder opaken Folie einzustellen. Dabei ist es für das erfindungsgemäße Verfahren wesentlich, daß die Extrusionstemperatur oberhalb der Glastemperatur/Vicat-Erweichungstemperatur des amorphen Polymeren liegt. Im allgemeinen liegt die Extrusionstemperatur mindestens 10 °C, vorzugsweise 15 bis 180 °C, insbesondere 20 bis 150 °C, über der $T_G$ oder der $T_V$ des amorphen Polymeren.

Es wird vermutet, daß sich das amorphe Polymere bei den für die Folienherstellung üblichen Extrusionsbedingungen verflüssigt und dann während der Extrusion überraschenderweise je nach Viskosität des Polyolefins der vakuolenhaltigen Schicht und der Viskosität des amorphen Polymeren bei der gewählten Extrusionstemperatur in mehr oder weniger große partikelartige Teilchen überraschenderweise separiert und nicht agglomeriert. Diese während der Extrusion entstehenden Teilchen wirken dann während der Orientierung der Folie ähnlich den bekannten teilchenförmigen vakuoleniniziierenden Füllstoffen. Diese Schlußfolgerungen werden durch rasterelektronenmikroskopische Aufnahmen der orientierten Folie nahegelegt, welche zeigen, daß die Folie Vakuolen aufweist, innerhalb derer sich partikelförmige Teilchen aus dem amorphen Polymer befinden. Das heißt, das amorphe Polymere, welches einfach als Feststoff zugegeben wird, liegt nach der Extrusion und Orientierung in der Folie in Form von feinverteilten Teilchen vor, welche sich innerhalb der Vakuolen befinden.

Die Erfindung wird nun anhand von Ausführungsbeispielen noch näher erläutert.

**Beispiel 1**

Es wurde durch Coextrusion und durch anschließende stufenweise Orientierung in Längs- und in Querrichtung eine opake dreischichtige Folie mit symmetrischem Aufbau mit einer Gesamtdicke von 40 μm hergestellt. Die Deckschichten hatten eine Dicke von jeweils 0,6 μm.

| A-Basisschicht (= vakuolenhaltige Schicht): | |
|---|---|
| 94,85 Gew.-% | hochisotaktisches Polypropylen der Firma Solvay mit dem Markennamen ®Eltex PHP 405 |
| 5,0 Gew.-% | eines Cycloolefincopolymeren mit einer $T_g$ von 174 °C und einem mittleren Molekulargewicht von 34 000 |
| 0,15 Gew.-% | N,N-bis-ethoxyalkylamin |

| B-Deckschichten: | |
|---|---|
| 98,77 Gew.-% | statistisches Ethylen-Propylen-Copolymeres mit einem $C_2$-Gehalt von 4,5 Gew.-% |
| 0,33 Gew.-% | $SiO_2$ als Antiblockmittel mit einer mittleren Teilchengröße von 2 μm |
| 0,90 Gew.-% | Polydimethylsiloxan mit einer Viskosität von 30 000 mm$^2$/s |

Die Herstellungsbedingungen in den einzelnen Verfahrensschritten waren:

| Extrusion | Temperaturen | A-Schicht | 280 °C |
| | | B-Schichten | 280 °C |
| | Temperatur der Abzugswalze | | 30 °C |
| Längsstreckung | Temperatur | | 130 °C |
| | Längsstreckverhältnis | | 6,5 |
| Querstreckung | Temperatur | | 170 °C |
| | Querstreckverhältnis | | 8,5 |
| Fixierung | Temperatur | | 140 °C |
| | Konvergenz | | 15 % |

Die auf diese Weise hergestellte Folie hatte ein opak-weißes Aussehen und einen papierähnlichen Charakter.

**Beispiel 2**

Im Vergleich zu Beispiel 1 wurde lediglich die Extrusionstemperatur um 30 °C herabgesetzt. Die auf diese Weise hergestellte Folie hatte ein opak-weißes Aussehen.
Zur Charakterisierung der Rohstoffe und der Folien wurden die folgenden Meßmethoden benutzt:

Schmelzflußindex

Der Schmelzflußindex wurde in Anlehnung an DIN 53 735 bei 21,6 N Belastung und 230 °C gemessen.

Schmelzpunkt

DSC-Messung, Maximum der Schmelzkurve, Aufheizgeschwindigkeit 20 °C/min.

Dichte

Die Dichte wird nach DIN 53 479, Verfahren A, bestimmt.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° oder 85° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Opazität und Weißgrad

Die Bestimmung der Opazität und des Weißgrades erfolgt mit Hilfe des elektrischen Remissionsphotometers "ELREPHO" der Firma Zeiss, Oberkochem (DE), Normlichtart C, 2° Normalbeobachter. Die Opazität wird nach DIN 53 146 bestimmt. Der Weißgrad wird als WG = RY + 3RZ - 3RX definiert. WG = Weißgrad; RY, RZ, RX = entsprechende Reflexionsfaktoren bei Einsatz des Y-, Z- und X-Farbmeßfilters. Als Weißstandard wird ein Preßling aus Bariumsulfat (DIN 5033, Teil 9) verwendet. Eine ausführliche Beschreibung ist z. B. in Hansl Loos "Farbmessung", Verlag Beruf und Schule, Itzehoe (1989), beschrieben.

Lichtdurchlässigkeit

Die Lichtdurchlässigkeit wird in Anlehnung an ASTM-D 1003-77 gemessen.

Mittleres Molekulargewicht und Molmassen-Dispersität

Die mittleren Molmassen ($M_w$,$M_n$) und die mittlere Molmassen-Dispersität ($M_w$/$M_n$) wurden in Anlehnung an DIN 55 672, Teil 1, mittels Gelpermeationschromatographie bestimmt. Anstelle von THF wurde als Elutionsmittel Orthodichlorbenzol verwendet. Da die zu untersuchenden olefinischen Polymeren bei Raumtemperatur nicht löslich sind, wird die gesamte Messung bei erhöhter Temperatur (~135 °C) durchgeführt.

Kristallinität

Die Kristallinität wurde mit Hilfe röntgenographischer Methoden bestimmt. Hierbei wurden die korrigierten gebeugten Röntgen-Intensitäten den Anteilen der amorphen und kristallinen Phasen proportional gesetzt.

Glastempertur

Die Proben wurden mit Hilfe der DSC (Difference-Scanning-Calometry) untersucht. Die Aufheizgeschwindigkeit betrug 20 K/min. Um die thermische Vorgeschichte in der Probe zu eliminieren, wurde die Probe im DSC-Gerät zunächst über die Glastemperatur $T_G$ erhitzt, rasch abgekühlt und dann erneut erhitzt (zweites Aufheizen). Aus dem Thermogramm für das zweite Aufheizen wurde die Temperatur für den Glasübergang als halbe Stufenhöhe entnommen.

Vicat-Erweichungstemperatur

Die Vicat-Erweichungstemperatur VST/B/120 wurde nach 150 306, DIN 53 460 gemessen.

**Patentansprüche**

1. Orientierte Polyolefinfolie, die mindestens eine vakuolenhaltige Schicht enthält, dadurch gekennzeichnet, daß die vakuolenhaltige Schicht ein amorphes, vakuoleniniziierendes Polymer enthält, welches nach der Orientierung innerhalb der Vakuole als separiertes Teilchen vorlieg, *wobei das amorphe Polymer ein amorphes Copolymere von polycyclischen Olefinen ist.*

2. Orientierte Polyolefin-Mehrschichtfolie nach Anspruch 1 aus einer vakuolenhaltigen Schicht und mindestens einer weiteren Schicht, dadurch gekennzeichnet, daß die vakuolenhaltige Schicht ein *amorphes Copolymere von polycyclischen Olefinen* enthält, welches nach der Orientierung innerhalb der Vakuole als separiertes Teilchen vorliegt.

3. Polyolefinfolie nach Anspruch 1 und/oder 2, dadurch gekennzeichnet, daß die vakuolenhaltige Schicht 70 bis 99 Gew.-% eines Polyolefins, vorzugsweise eines Propylenpolymeren, und 1 bis 40 *Gew.-%amorphes Copolymere von polycyclischen Olefinen,* jeweils bezogen auf das Gewicht der vakuolenhaltigen Schicht, enthält.

4. Polyolefinfolie nach einem oder mehreren der Ansprüche 1 bis 3, dadurch gekennzeichnet, daß die Folie eine Lichtdurchlässigkeit von kleiner 95 %, vorzugsweise kleiner 75 %, gemessen nach ASTM-D 1003-77 aufweist.

5. Polyolefinfolie nach einem oder mehreren der Ansprüche 1 bis 4, dadurch gekennzeichnet, daß das *amorphes Copolymere von polycyclischen Olefinen* eine Glastemperatur $T_G$ im Bereich von 70 bis 300 C oder eine Vicat-Erweichungstemperatur $T_V$ von 70 bis 200 C hat.

6. Polyolefinfolie nach einem oder mehreren der Ansprüche 1 bis 5, dadurch gekennzeichnet, daß das *amorphes Copolymere von polycyclischen Olefinen* einen Kristallinitätsgrad von unter 5 % und ein mittleres Molekulargewicht $M_W$ von 500 bis 500 000 hat.

7. Polyolefinfolie nach einem oder mehreren der Ansprüche 1 bis 6, dadurch gekennzeichnet, daß das *amorphes Copolymere von polycyclischen Olefinen* einen Brechungsindex von 1,3 bis 1,7 hat und dieser Brechungsindex um maximal 0,1 Einheiten größer oder kleiner als der Brechungsindex des Polyolefins ist.

8. Polyolefinfolie nach einem oder mehreren der Ansprüche 1 bis 7, dadurch gekennzeichnet, daß die in den Vakuolen vorliegenden Teilchen aus *amorphem Copolymer von polycyclischen Olefinen* eine Teilchengröße im Bereich von 0,2 bis 10 µm, vorzugsweise 0,5 bis 7 µm, aufweisen.

9. Polyolefinfolie nach einem oder mehreren der Ansprüche 1 bis 8, dadurch gekennzeichnet, daß die vakuolenhaltige Schicht zusätzlich Pigmente, vorzugsweise $TiO_2$, enthält.

10. Polyolefinfolie nach einem oder mehreren der Ansprüche 1 bis 9, dadurch gekennzeichnet, daß die Dichte der Polyolefinfolie maximal 1,5 $g/cm^3$, vorzugsweise 0,4 bis 1,3 $g/cm^3$, beträgt.

11. Polyolefinfolie nach einem oder mehreren der Ansprüche 1 bis 10, dadurch gekennzeichnet, daß die vakuolenhaltige Schicht die Basisschicht, eine Zwischenschicht oder eine Deckschicht der Folie bildet.

12. Polyolefinfolie nach einem oder mehreren der Ansprüche 1 bis 11, dadurch gekennzeichnet, daß die andere Schicht 75 bis 100 Gew.-% eines -olefinischen Polymeren enthält.

13. Polyolefinfolie nach einem oder mehreren der Ansprüche 1 bis 12, dadurch gekennzeichnet, daß die andere Schicht die Basisschicht, eine Zwischenschicht oder eine Deckschicht der Folie bildet.

14. Polyolefinfolie nach einem oder mehreren der Ansprüche 1 bis 13, dadurch gekennzeichnet, daß die andere Schicht amorphes Polymer als vakuoleniniziierenden Füllstoff enthält und Vakuolen aufweist.

15. Polyolefinfolie nach einem oder mehreren der Ansprüche 1 bis 14, dadurch gekennzeichnet, daß die andere Schicht ein Pigment enthält.

16. Polyolefinfolie nach einem oder mehreren der Ansprüche 1 bis 15, dadurch gekennzeichnet, daß das Polyolefin der Basis-, einer Zwischen- und/-oder einer Deckschicht peroxidisch abgebaut ist.

17. Polyolefinfolie nach einem oder mehreren der Ansprüche 1 und 3 bis 11, dadurch gekennzeichnet, daß die Folie aus der vakuolenhaltigen Schicht besteht.

## Claims

1. An oriented polyolefin film with at least one vacuole-containing layer, wherein the vacuole-containing layer contains an amorphous vacuole-initiating polymer which, after orienting, is present as a separate particle inside the vacuole, the amorphous polymer being an amorphous copolymer of polycyclic olefins.

2. An oriented polyolefin sandwich film as claimed in claim 1, composed of a vacuole-containing layer and at least one further layer, wherein the vacuole-containing layer contains an amorphous copolymer of polycyclic olefins which, after orienting, is present as a separate particle inside the vacuole.

3. A polyolefin film as claimed in claim 1 and/or 2, wherein the vacuole-containing layer contains 70 to 99% by weight of a polyolefin, preferably a propylene polymer, and 1 to 40% by weight of an amorphous copolymer of polycyclic olefins, each relative to the weight of the vacuole-containing layer.

4. A polyolefin film as claimed in one or more of claims 1 to 3, wherein the film has a light transmission of less than 95%, preferably less than 75%, measured according to ASTM-D 1003-77.

5. A polyolefin film as claimed in one or more of claims 1 to 4, wherein the amorphous copolymer of polycyclic olefins has a glass temperature $T_G$ in the range from 70 to 300°C or a Vicat softening point $T_V$ from 70 to 200°C.

6. A polyolefin film as claimed in one or more of claims 1 to 5, wherein the amorphous copolymer of polycyclic olefins has a degree of crystallinity of less than 5% and a mean molecular weight $M_W$ from 500 to 500,000.

7. A polyolefin film as claimed in one or more of claims 1 to 6, wherein the amorphous copolymer of polycyclic olefins has a refractive index from 1.3 to 1.7 and this refractive index is at most 0.1 unit greater or smaller than the refractive index of the polyolefin.

8. A polyolefin film as claimed in one or more of claims 1 to 7, wherein the particles of amorphous copolymer of polycyclic olefins present in the vacuoles have a particle size in the range from 0.2 to 10 µm, preferably 0.5 to 7 µm.

9. A polyolefin film as claimed in one or more of claims 1 to 8, wherein the vacuole-containing layer additionally contains pigments, preferably $TiO_2$.

10. A polyolefin film as claimed in one or more of claims 1 to 9, wherein the density of the polyolefin film is at most 1.5 $g/cm^3$, preferably 0.4 to 1.3 $g/cm^3$.

11. A polyolefin film as claimed in one or more of claims 1 to 10, wherein the vacuole-containing layer forms the base layer, an interlayer or a top layer of the film.

12. A polyolefin film as claimed in one or more of claims 1 to 11, wherein the other layer contains 75 to 100% by weight of an $\alpha$-olefinic polymer.

13. A polyolefin film as claimed in one or more of claims 1 to 12, wherein the other layer forms the base layer, an interlayer or a top layer of the film.

14. A polyolefin film as claimed in one or more of claims 1 to 13, wherein the other layer contains an amorphous polymer as a vacuole-initiating filler and has vacuoles.

15. A polyolefin film as claimed in one or more of claims 1 to 14, wherein the other layer contains a pigment.

16. A polyolefin film as claimed in one or more of claims 1 to 15, wherein the polyolefin of the base layer, of an interlayer and/or of a top layer has been degraded by a peroxide mechanism.

17. A polyolefin film as claimed in one or more of claims 1 and 3 to 10, wherein the film is composed of the vacuole-containing layer.

**Revendications**

1. Feuille de polyoléfine orientée, contenant au moins une couche vacuolaire, caractérisée en ce que la couche vacuolaire contient un polymère amorphe initiateur de vacuoles qui, après l'orientation, se trouve sous forme de particules séparées au sein de la vacuole, *le polymère amorphe étant un copolymère amorphe d'oléfines polycycliques.*

2. Feuille multicouche de polyoléfine orientée suivant la revendication 1, faite d'une couche vacuolaire et d'au moins une autre couche, caractérisée en ce que la couche vacuolaire contient un *copolymère amorphe d'oléfines polycycliques* qui, après l'orientation, se trouve sous forme de particules séparées au sein de la vacuole.

3. Feuille de polyoléfine suivant la revendication 1 et/ou 2, caractérisée en ce que la couche vacuolaire contient 70 à 99% en poids d'une polyoléfine, de préférence d'un polymère de propylène, et 1 à 40% en poids de *copolymère amorphe d'oléfines polycycliques,* dans chaque cas sur la base du poids de la couche vacuolaire.

4. Feuille de polyoléfine suivant une ou plusieurs des revendications 1 à 3, caractérisée en ce que la feuille présente une transparence inférieure à 95%, de préférence inférieure à 75%, mesurée suivant ASTM-D 1003-77.

5. Feuille de polyoléfine suivant une ou plusieurs des revendications 1 à 4, caractérisée en ce que le *copolymère amorphe d'oléfines polycycliques* a une température de transition vitreuse TG comprise dans l'intervalle de 70 à 300°C ou une température de ramollissement Vicat $T_V$ de 70 à 200°C.

6. Feuille de polyoléfine suivant une ou plusieurs des revendications 1 à 5, caractérisée en ce que le *copolymère amorphe d'oléfines polycycliques* possède un degré de cristallinité inférieur à 5% et un poids moléculaire moyen $M_W$ de 500 à 500 000.

7. Feuille de polyoléfine suivant une ou plusieurs des revendications 1 à 6, caractérisée en ce que le *copolymère amorphe d'oléfines polycycliques* a un indice de réfraction de 1,3 à 1,7, et en ce que cet indice de réfraction est supérieur ou inférieur de 0,1 unité au maximum à l'indice de réfraction de la polyoléfine.

8. Feuille de polyoléfine suivant une ou plusieurs des revendications 1 à 7, caractérisée en ce que les particules de *copolymère amorphe d'oléfines polycycliques* présentes dans les vacuoles présentent une taille particulaire comprise dans l'intervalle de 0,2 à 10 µm, de préférence de 0,5 à 7 µm.

9. Feuille de polyoléfine suivant une ou plusieurs des revendications 1 à 8, caractérisée en ce que la couche vacuolaire contient en outre des pigments, de préférence du $TiO_2$.

10. Feuille de polyoléfine suivant une ou plusieurs des revendications 1 à 9, caractérisée en ce que le poids spécifique de la feuille de polyoléfine vaut au maximum 1,5 g/cm$^3$, de préférence 0,4 à 1,3 g/cm$^3$.

11. Feuille de polyoléfine suivant une ou plusieurs des revendications 1 à 10, caractérisée en ce que la couche vacuolaire forme la couche de base, une couche intermédiaire ou une couche de revêtement de la feuille.

12. Feuille de polyoléfine suivant une ou plusieurs des revendications 1 à 11, caractérisée en ce que l'autre couche contient 75 à 100% en poids d'un polymère oléfinique.

13. Feuille de polyoléfine suivant une ou plusieurs des revendications 1 à 12, caractérisée en ce que l'autre couche forme la couche de base, une couche intermédiaire ou une couche de revêtement de la feuille.

14. Feuille de polyoléfine suivant une ou plusieurs des revendications 1 à 13, caractérisée en ce que l'autre couche contient un polymère amorphe en tant que charge initiatrice de vacuoles et présente des vacuoles.

15. Feuille de polyoléfine suivant une ou plusieurs des revendications 1 à 14, caractérisée en ce que l'autre couche contient un pigment.

16. Feuille de polyoléfine suivant une ou plusieurs des revendications 1 à 15, caractérisée en ce que la polyoléfine de la couche de base, d'une couche intermédiaire et/ou d'une couche de revêtement est décomposée par peroxydation.

17. Feuille de polyoléfine suivant une ou plusieurs des revendications 1 et 3 à 11, caractérisée en ce que la feuille est constituée de la couche vacuolaire.